# EUROPÄISCHE PATENTSCHRIFT

(11) **EP 3 476 220 B1**
(45) Veröffentlichungstag und Bekanntmachung des Hinweises auf die Patenterteilung: **26.08.2020**
(21) Anmeldenummer: 17198240.8
(22) Anmeldetag: 25.10.2017
(51) Int. Cl.: A23C 7/04, A23C 9/142, A23C 19/028, A23C 19/032, A23C 19/076

(54) **VERFAHREN ZUR HERSTELLUNG VON QUARKGRUNDMASSE MIT VERBESSERTEN GESCHMACKSEIGENSCHAFTEN**
METHOD FOR PRODUCING QUARK MASS WITH IMPROVED FLAVOUR PROPERTIES
PROCÉDÉ DE PRODUCTION D'UNE SUBSTANCE DE BASE DE FROMAGE FRAIS PRÉSENTANT DES QUALITÉS GUSTATIVES AMÉLIORÉES

(43) Veröffentlichungstag der Anmeldung: 01.05.2019
(73) Patentinhaber: DMK Deutsches Milchkontor GmbH, 27404 Zeven (DE)
(72) Erfinder: DÖRING, Sven-Rainer, 27404 Zeven (DE)
(74) Vertreter: Fabry, Bernd

(56) Entgegenhaltungen:
- EP-A1- 2 839 747
- EP-A1- 2 839 749
- US-A- 4 689 234
- US-A1- 2013 273 202
- Germano Mucchetti ET AL: "The pre-concentration of milk by nanofiltration in the production of Quarg-type fresh cheeses", Lait, Januar 2000 (2000-01), Seiten 43-50, XP55087166, DOI: 10.1051/lait:2000106 Gefunden im Internet: URL:http://lait.dairy-journal.org/articles /lait/pdf/2000/01/L0107.pdf [gefunden am 2013-11-07]
- MOSHE ROSENBERG: "Current and future applications for membrane processes in the dairy industry", TRENDS IN FOOD SCIENCE & TECHNOLOGY, Bd. 6, Nr. 1, Januar 1995 (1995-01), Seiten 12-19, XP55197852, ISSN: 0924-2244, DOI: 10.1016/S0924-2244(00)88912-8

## Beschreibung

### GEBIET DER ERFINDUNG

Die Erfindung befindet sich auf dem Gebiet Milchprodukte und betrifft ein Verfahren zur Herstellung einer mineralarmen Quarkgrundmasse.

### STAND DER TECHNIK

Zur Herstellung von Quark oder Frischkäse - die beiden Begriffe werden im Folgenden synonym verwendet - wird in der Regel entrahmte Milch einer Temperaturbehandlung unterworfen und die enthaltenen Proteine denaturiert.

Durch die anschließende Zugabe von Milchsäurebakterien und Lab erfolgt die so genannte Dicklegung (Phasenumkehrung) der Milch. Das Casein gerinnt und bildet die fachlich bezeichnete Gallerte aus. Nach der Reifung (8 bis 20 h) wird die Gallerte aufgerührt. Hierdurch die Molkenabtrennung ausgelöst und im Separator werden dann die beiden Phasen getrennt. Die flüssige Sauermolke wird anderweitig verarbeitet und die Quarkgrundmasse durch Zugabe von Sahne auf den gewünschten Fett- und Proteingehalt eingestellt.

Dominiert werden die technischen Herstellverfahren durch entsprechende Separierverfahren. Durch Variation der Separierbedingungen und technische Modifikationen der Separatoren ist derzeit eine Vielfalt von Verfahrensausgestaltungen möglich. Der Magermilcheinsatz liegt bei einem Eiweißgehalt der Magermilch von 3,3 bis 3,5 Gew.-% im Bereich von 4,10 bis 4,15 kg Magermilch je Kilogramm zu produzierendem Magerquark oder Frischkäse (4,10 bis 4,15 kg Magermilch/kg Magerquark), wenn letztere 18 % Trockenmasse aufweisen. Somit fallen 3,10 bis 3,15 kg Sauermolke je Kilogramm Magerquark an (3,10 bis 3,15 kg Sauermolke/kg Magerquark). Der Eiweißgehalt erreicht dabei Größenordnungen von 12,6 bis 12,8 Gew.-%.

Neben den durch Separation gekennzeichneten Herstellverfahren sind auch Verfahren bekannt, in denen die Aufkonzentrierung der fermentierten Prozessmilch mittels Ultrafiltration erfolgt. So ist z.B. aus der US 2003/0129275 A1 (LACT INNOVATION) bekannt, dass bei der Käse- und Quarkherstellung auch die Mikrofiltration und Ultrafiltrationsschritte eingesetzt werden können. Die Anwendung der Mikrofiltration auf Magermilch zur Herstellung von Käse und Molkeproteinprodukten wird beispielsweise in der US 2003/0077357 A1 (CORNELL RES FOUNDATION) beschrieben.

Aus der EP 1752046 A1 (TUCHENHAGEN) ist ein Verfahren zur Herstellung von fermentierten Milchprodukten bekannt, bei dem man Prozessmilch fermentiert, das Fermentationsprodukt einer Mikrofiltration unterwirft und nur das gesäuerte Retentat weiterverarbeitet.

In ihrem Aufsatz mit dem Titel *"*The pre-concentration of milk by nanofiltration in the production of Quarg-type fresh cheeses" beschreiben MUCCHETTI ET AL den Einfluss der Anwendung einer zuvor nanofiltrierten Milch auf die Eigenschaften eines Quarks, welcher aus dieser nanofiltrierten Milch hergestellt wird. Vorversuche des Nanofiltrationsverfahrens wurden mit wässrigen Lösungen von NaCl, CaCl₂, MgSO₄, Na₂SO₄ Laktose und Vollmilch durchgeführt. Der Herstellungsweg entspricht dem Standard Herstellverfahren von Quark, wobei lediglich statt Magermilch im Sinne der vorliegenden Anmeldung ein aus der Nanofiltration von Vollmilch resultierendes Retentat verwendet wird. [vgl. LAIT VOL. 80 (1), S. 43-50 (2000**)**]

In DEUTSCHE MILCHWIRTSCHAFT VOL 48(2), S. 36-41 (1997**)** wird ein Verfahren zur Frischkäseherstellung offenbart, bei dem die Magermilch durch Nanofiltrieren konzentriert wird. Anschließend wird die Milch bei 80 °C für sieben Minuten erhitzt, anschließend bei 30 °C in eine ausgewählte Kulturenkombination eingerührt und dann für 14 bis 16 Stunden fermentiert. Nach der Fermentation wird die gewünschte Trockenmasse des Endproduktes durch Ultrafiltrieren oder Separieren eingestellt.

Die EP 1364582 A1 betrifft ein gesäuertes Milchprodukt, dessen wesentlicher Bestandteil Milch und/oder Magermilch und/oder Molke darstellt. Konkret beansprucht werden gesäuerte Michprodukte, welche durch Entzug von einwertigen Ionen und Wasser mittels Nanofiltration aus Milch- und/oder Molke-Ausgangsprodukten erhalten werden

Ein besonderes Problem im Zusammenhang mit der Herstellung von Frischkäse besteht darin, Grundmassen zu erzeugen, die geschmacklich neutral sind. Wird Magermilch mittels Ultrafiltration auf eine Quarkgrundmasse vorkonzentriert und anschließend gesäuert, weist das Produkt nämlich einen sehr bitteren Geschmack auf und ist sensorisch nicht akzeptabel. Diese sensorische Abweichung wird insbesondere durch die Anwesenheit von Bitterproteinen und Phosphaten induziert. Alkalimetallionen, insbesondere Natrium, neigen dazu, einen metallischen Geschmack hervorzurufen. Die Verfahren des Stands der Technik zur Aufkonzentrierung von ungesäuerter Magermilch zu Quark sind bisher nicht in der Lage, Phosphate und Alkalimetallionen quantitativ abzutrennen, so dass noch solche Mengen im Produkt verbleiben, dass eine geschmackliche Beeinträchtigung nicht verhindert werden kann.

Weiterhin fällt bei der konventionellen Herstellung von Quark als Koppelprodukt Sauermolke an, deren Abtrennung vom Käsebruch aufwendig ist und für die es nur begrenzte Verwendungsmöglichkeiten gibt.

Ein Weg zur Verbesserung der geschmacklichen Eigenschaften besteht in der Verwendung bestimmter Starterkulturen, die dazu beitragen, dass bittere Geschmackswahrnehmungen maskiert werden (vgl. EP 2839748**,** EP 2839749 A1, DMK), was jedoch an der Präsenz dieser Bitterstoffe nichts ändert - und natürlich auch nicht das Problem der Sauermolke als Koppelprodukt löst. Will man die Bitterstoffe tatsächlich abtrennen - auch vor dem Hintergrund natriumarmer Produkte - muss anders verfahren werden.

So wird z.B. in der EP 2796051 A1 (DMK) zur Verbesserung der geschmacklichen Qualität von Frischkäse oder Quark vorgeschlagen, Magermilch zunächst einer gekoppelten Ultra- und Filtration zu unterwerfen und das dabei anfallende Permeat einer Fällungsdemineralisierung zu unterwerfen, und das mineralstoffarme Filtrat mit dem proteinreichen Retentat aus der Ultrafiltration zu vereinigen, ehe diese Mischung dann denaturiert, fermentiert und standardisiert wird. Nachteilig ist hierbei jedoch, dass weder die Abtrennung von Bitterstoffen noch von einwertigen Kationen, speziell Natrium die einen metallischen Beigeschmack verursachen, vollständig erfolgt und das resultierende Produkt daher geschmacklich unzureichend ist. Zudem ist die Fällung der Calciumsalze technisch aufwendig und entsprechend teuer.

Die Aufgabe der vorliegenden Erfindung hat somit darin bestanden, eine geschmacklich verbesserte Quarkmasse mit vermindertem Anteil an Bitterstoffen, speziell Bitterproteinen sowie vermindertem Natriumgehalt (kleiner 50 ppm, vorzugsweise kleiner 10 ppm) und gleichzeitig verbesserten sensorischen und geschmacklichen Eigenschaften speziell im Hinblick auf die Lehre der oben genannten EP 2796051 A1 zur Verfügung zu stellen, die ohne Zusatz von Additiven direkt abfüll- und verzehrfertig ist. Gleichzeitig sollte das entsprechende Herstellverfahren ohne den Anfall von Sauermolke als Abfallprodukt auskommen und stattdessen Koppelprodukte mit höherer Wertschöpfung bereitstellen.

### BESCHREIBUNG DER ERFINDUNG

Gegenstand der vorliegenden Erfindung ist ein Verfahren zur Herstellung einer mineralarmen Quarkgrundmasse, umfassend die folgenden Schritte:
(a) Erzeugen einer Magermilch durch Temperaturbehandlung einer Rohmilch und Abtrennung des Rahms;
(b) Unterwerfen der so erzeugten Magermilch einer Ultrafiltration unter Erhalt eines proteinreichen Retentats R1 und eines lactosereichen Permeats P1, wobei die Ultrafiltration mit Membranen durchführt, die eine Trennschärfe von 1.000 bis 50.000 Dalton aufweisen;
(c) Anreichern des Retentats R1 mit einer Menge Lactose, die der Menge entspricht, die zuvor in der Ultrafiltration als Permeat abgetrennt worden ist,
(d) Temperaturbehandlung des so erzeugten Anreicherungsproduktes, bis Denaturierung eintritt,
(e) Fermentieren des so erzeugten Denaturierungsproduktes durch Zugabe von Starterkulturen und Lab sowie
(f) Einstellen des so erzeugten Fermentationsproduktes auf einen definierten Trockenmassen- und Proteingehalt.

Insbesondere wird das Retentat, das hinsichtlich seiner Zusammensetzung im Eiweißgehalt oberhalb des Zielwertes des Quarks liegt, im Schritt (c) mit einer solchen Menge an Lactose versetzt, dass nach der Fermentation direkt Quark vorliegt. Die erforderlichen Mengen kann der Fachmann aufgrund seines allgemeinen Fachwissens problemlos ermitteln. Somit kann dieses Verfahren auf weitere Frischkäsesorten angewendet werden und ist nicht nur dem Quark, als typisch deutschem Produkt vorbehalten.

Überraschenderweise wurde gefunden, dass die Aufgabe voll umfänglich gelöst wird, wenn Magermilch lediglich einer Ultrafiltration unterworfen wird und das dabei anfallende Retentat, welches die wertvollen langkettigen geschmacksneutralen Proteine enthält, mit Lactose auf den Ursprungswert angereichert und dann wie üblich weiterverarbeitet wird.

Von besonderem Vorteil ist, dass dabei als wertvolles Koppelprodukt als Permeat eine zweite proteinreiche Phase anfällt, die neben Lactose praktisch alle kurzkettigen Bitterproteine enthält und getrennt weiterverarbeitet werden kann (WPC = whey protein concentrate).

Im Gegensatz zur Kombination aus Ultrafiltration, Nanofiltration und Fällung erweist sich das erfindungsgemäße Verfahren nicht nur als technisch weniger aufwendig und schneller, mit dem Permeat wird auch der größte Teil der Mineralsalze entfernt, was zu einem geringen Natriumgehalt und gleichzeitig weiter verbesserter Geschmacksqualität führt. Typischerweise liegen die Natriumwerte im Bereich von 5 bis 50 ppm.

### MAGERMILCHHERSTELLUNG

Zur Herstellung der Magermilch erfolgt zunächst eine Abtrennung von Nicht-Milchbestandteilen sowie die Entrahmung des Fettanteils von etwa 4 Gew.-% aus der Rohmilch. Dies findet üblicherweise in einem speziellen Bauteil, vorzugsweise einem Separator statt. Derartige Bauteile sind aus dem Stand der Technik hinreichend bekannt. In der Milchindustrie sehr verbreitet sind Separatoren der Firma GEA Westfalia Separator GmbH, mit denen die beiden Schritte einzeln oder gemeinsam durchgeführt werden können.¹ Entsprechende Bauteile sind beispielsweise auch in der DE 10036085 C1 (Westfalia) beschrieben und dem Fachmann bestens bekannt, so dass es zur Durchführung dieser Verfahrensschritte keiner Erläuterungen bedarf, da sie den allgemeinen Fachwissen zuzurechnen sind.

Die Wärmebehandlung der Rohmilch erfolgt vorzugsweise in Wärmeaustauschern, wobei sich speziell Plattenwärmeaustauscher als besonders geeignet erwiesen haben. An den Wärmeaustauschern liegt ein Temperaturgradient an, der jedoch so gewählt ist, dass die Rohmilch für eine Verweilzeit von mindestens 20 und höchstens 60 Sekunden, vorzugsweise etwa 30 Sekunden auf eine Temperatur von etwa 70 bis 80 °C und insbesondere etwa 72 bis 74 °C erhitzt wird.
¹ (http://www.westfalia-separator.com/de/anwendungen/molkereitechnik/milch-molke.html).

### ULTRAFILTRATION

Im zweiten Verfahrensschritt wird die Magermilch mit Hilfe einer Ultrafiltration in ein Milchproteinkonzentrat, das als Retentat anfällt und ein Milchpermeat getrennt.

Unter dem Begriff Ultrafiltration wird eine Filtration durch Membranen mit einer Porengröße < 0,1 µm (1.000 bis 50.000 Dalton) verstanden, während die Filtration bei Porengrößen > 0,1 µm gewöhnlich als Mikrofiltration bezeichnet wird. In beiden Fällen handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 0,1 und 10 bar liegt. Der Werkstoff der Filterfläche kann je Einsatzgebiet aus Edelstahl, Kunststoff, Keramik oder textilen Gewebe bestehen. Es gibt verschiedene Erscheinungsformen der Filterelemente: Kerzenfilter, Flachmembranen, Spiralwickelmembranen, Taschenfilter und Hohlfasermodule, die im Sinne der vorliegenden Erfindung alle grundsätzlich geeignet sind.

Die Ultrafiltration erfolgt vorzugsweise bei Temperaturen im Bereich von etwa 10 bis etwa 55, vorzugsweise 10 bis 20 °C, wobei die Membranen einen Porendurchmesser im Bereich von 1.000 bis 50.000 und vorzugsweise etwa 5.000 bis etwa 25.000 Dalton besitzen. Vorzugsweise handelt es sich um sogenannte Spiralwickelmembranen oder Platte-Rahmen-Module aus Polysulfon oder Polyethylenmembranen.

### EINSTELLEN DES LACTOSEGEHALTES

Im Zuge der Ultrafiltration wird ein Retentat erhalten, welches die wertvollen langkettigen geschmacksneutralen Proteine enthält, während im Permeat Lactose, Salze und kurzkettige Bitterproteine enthalten sind; diese können separat aufgearbeitet werden. Um auf der Grundlage des Retentats eine geschmacklich ansprechende Quarkgrundmasse zu erhalten, wird diesem Lactose zugesetzt und zwar in einer solchen Menge, dass der ursprüngliche Lactosegehalt wieder erreicht wird. Natürlich ist es möglich, auch geringere Lactosemengen einzustellen, wenn lactosearme Produkte erhalten werden sollen. Typisch wird das Retentat auf einen Lactosegehalt von etwa 0,1 bis etwa 3 Gew.-%, vorzugsweise etwa 0,5 bis etwa 2,5 Gew.-% und insbesondere etwa 1 bis etwa 2 Gew.-% eingestellt. Tauscht man Lactose mol-gleich gegen eine Mischung aus Glucose und Galactose aus, können auch lactosefreie Produkte hergestellt werden.

Es ist ebenfalls möglich, diesen Verfahrensschritt zu nutzen, um auch andere Stoffe einzubringen. Dabei ist die Natur der weiteren Zusatzstoffe unkritisch. Es kann sich dabei um weitere Kohlenhydrate, beispielsweise Zucker handeln, aber auch Nahrungszusatzstoffe wie Lactoferrin oder ungesättigte Fettsäuren können eingebracht werden.

### DENATURIERUNG

Im folgenden Schritt wird die proteinreiche Fraktion aus der Ultrafiltration, also das Retentat, mit dem Diluat aus der Elektrodialyse vereinigt und einer thermischen Behandlung unterworfen. Die nun erfolgende Denaturierung kann in an sich bekannter Weise erfolgen, nämlich über einen Zeitraum von etwa 5 bis etwa 10 min und vorzugsweise etwa 6 min und Temperaturen von etwa 85 bis etwa 90 °C und insbesondere etwa 88 °C.

### FERMENTATION UND STANDARDISIERUNG

Auch die Fermentation des denaturierten Vorproduktes kann nach den bekannten Verfahren des Stands der Technik erfolgen. Dazu werden geeignete Starterkulturen, vorzugsweise Milchsäurebakterien, und Lab zugesetzt. Als Starterkulturen eignen sich insbesondere probiotische Bakterien vom Typ *Bifido bakterium lactis B12* oder *Lactobazillus a-cidophilus* sowie mesophile Bakterien wie beispielsweise *Lactococcus lactis* oder *Leuconostoc cremoris.*

Besonders bevorzugt sind ferner die beiden folgenden Kulturen bestehend aus 5 bzw. 3 probiotischen Bakterien, nämlich:
Mischung 1
   (i-1) *Streptococcus thermophilus,*
   (i-2) *Leuconostoc species,*
   (i-3) *Lactococcus lactis subsp. lactis biovar diacetylactis,*
   (i-4) *Lactococcus lactis subsp. lactis* und
   (i-5) *Lactococcus lactis subsp. cremoris,* sowie
Mischung 2
   (ii-1) *Streptococcus thermophilus,*
   (ii-2) *Lactococcus lactis subsp. lactis* und
   (ii-3) *Lactococcus lactis subsp. cremoris*

Vorzugsweise enthalten die Starterkulturen
- etwa 10 bis etwa 90 Gew.-%, vorzugsweise etwa 25 bis etwa 75 Gew.-% und insbesondere etwa 40 bis etwa 60 Gew.-% der Mischung (i) und
- etwa 90 bis etwa 10 Gew.-%, vorzugsweise etwa 75 bis etwa 25 Gew.-% und insbesondere etwa 60 bis etwa 40 Gew.-% der Mischung (ii)
mit der Maßgabe, dass sich die Mengenangaben zu 100 Gew.-% ergänzen.

Besonders bevorzugt sind Starterkulturen, die
- etwa 40 bis etwa 60 Gew.-% der Mischung (i) und
- etwa 60 bis etwa 40 Gew.-% der Mischung (ii)
mit der Maßgabe enthalten, dass sich die Mengenangaben zu 100 Gew.-% ergänzen.

In einer weiteren bevorzugten Ausführungsform sind die fünf Mikroorganismen, die die Mischung (i) bilden sowie die drei Mikroorganismen, die die Mischung (ii) bilden, in jeweils etwa gleichen Mengen enthalten. "Etwa gleich" ist in diesem Zusammenhang so zu verstehen, dass in der Mischung (i) die fünf Mikroorganismen jeweils in Mengen von 20 ± 5 Gew.-% und in der Mischung (ii) die drei Mikroorganismen jeweils in Mengen von 33 ± 5 Gew.-% enthalten sind. Statt die beiden im Handel erhältlichen Zubereitungen (i) und (ii) gemeinsam einzusetzen, ist es natürlich grundsätzlich auch möglich, die fünf Mikroorganismen einzeln zu verwenden und dann so abzumischen, dass eine Starterkulturmischung erhalten wird, mit der die geschmacklich verbesserten Quarkprodukte erhalten werden. Solche Starterkulturen enthalten dann vorzugsweise
- etwa 20 bis etwa 30 Gew.-% *Streptococcus thermophilus,*
- etwa 5 bis etwa 15 Gew.-% *Leuconostoc species,*
- etwa 5 bis etwa 10 Gew.-% *Lactococcus lactis subsp. lactis biovar diacetylactis,*
- etwa 20 bis etwa 30 Gew.-% *Lactococcus lactis subsp. lactis,*
- etwa 20 bis etwa 30 Gew.-% *Lactococcus lactis subsp. cremoris,* und
mit der Maßgabe, dass sich die Mengenangaben zu 100 Gew.-% ergänzen.

Besonders bevorzugt sind Starterkulturen enthaltend
- 25 Gew.-% *Streptococcus thermophilus,*
- 12 Gew.-% *Leuconostoc species,*
- 13 Gew.-% *Lactococcus lactis subsp. lactis biovar diacetylactis,*
- 25 Gew.-% *Lactococcus lactis subsp. lactis,*
- 25 Gew.-% *Lactococcus lactis subsp. cremoris*

Alle genannten Mikroorganismen sind im Handel frei verfügbar.

Die Temperatur, bei der die Fermentation erfolgt, richtet sich nach dem Temperaturbereich, der für die jeweilig verwendeten Mikroorganismen optimal ist; typisch liegt die Temperatur im Bereich von etwa 18 bis etwa 35 °C und vorzugsweise bei etwa 30 °C.

Die nach der Fermentation erhaltene Quarkgrundmasse wird anschließend beispielsweise durch Zugabe von Sahne (etwa die Fraktion, di beider Herstellung der Magermilch angefallen ist) auf den gewünschten Gehalt an Trockenmasse und Proteinen eingestellt. Vorzugsweise liegt der Trockenmassengehalt bei etwa 15 bis etwa 20 Gew.-% und insbesondere bei etwa 18 Gew.-%. Der Proteingehalt kann etwa 10 bis etwa 15 Gew.-% und vorzugsweise etwa 12 Gew.-% betragen.

### BEISPIELE

### VERGLEICHSBEISPIEL V1

4.000 kg Magermilch wurden 6 min bei 88 °C behandelt und die enthaltenen Proteine denaturiert. Die Masse wurde mit Milchsäurebakterien gemäß Mischung (i) und Lab versetzt und bei 30 °C etwa 18 h gereift und anschließend aufgerührt. Anschließend wurde das Fermentationsprodukt in eine Zentrifuge gegeben und ca. 3,2 kg Sauermolke als flüssiger Bestandteil abgetrennt. Die zurückgebliebene Quarkmasse (ca. 800 kg) wurde durch Zugabe von Sahne auf einen Fettgehalt in der Trockenmasse von 40 Gew.-% und einen Proteingehalt von 12 Gew.-% eingestellt.

### VERGLEICHSBEISPIEL V2 (analog zu EP 2796051 A1)

4.000 kg Magermilch wurden bei 20 °C einer Ultrafiltration mit einer Spiralwickelmembran (Trennschärfe 25.000 Dalton) unterworfen. Das proteinreiche Retentat wurde abgetrennt und das Permeat bei 20 °C einer Nanofiltration mit einer Spiralwickelmembran unterworfen (Trennschärfe 500 Dalton). Mit dem Permeat wurden Natrium- und Kaliumsalze abgetrennt. Das Retentat wurde anschließend durch Zugabe einer wässrigen, mit NaOH auf pH = 6 eingestellten Calciumchlorid-Lösung behandelt und die Phosphate als Calciumphosphat gefällt. Das so erhaltene Permeat wurde mit dem proteinreichen Retentat aus dem ersten Schritt vereinigt, 6 min bei 88 °C behandelt und die enthaltenen Proteine denaturiert. Die Masse wurde mit Milchsäurebakterien gemäß Mischung (i) und Lab versetzt und bei 30 °C etwa 2 h gerührt. Anschließend wurde das Fermentationsprodukt in eine Zentrifuge gegeben und die Sauermolke als flüssiger Bestandteil abgetrennt. Die zurückgebliebene Quarkmasse wurde durch Zugabe von Sahne auf einen Fettgehalt in der Trockenmasse von 40 Gew.-% und einen Proteingehalt von 12 Gew.-% eingestellt.

### BEISPIEL 1

4.000 kg Magermilch wurden bei 20 °C einer Ultrafiltration mit einer Spiralwickelmembran (Trennschärfe 25.000 Dalton) unterworfen. Das proteinreiche Retentat wurde abgetrennt und das Permeat, welches neben Lactose kurzkettige Bitterproteine enthielt, separat weiterverarbeitet. Das Retentat wurde mit Lactose auf den ursprünglichen Gehalt von 2,8 Gew.-% eingestellt, so dass nach der Fermentation direkt Quark erhalten wurde, und das so erhaltene Anreicherungsprodukt anschließend 6 min bei 88 °C behandelt und die enthaltenen Proteine denaturiert. Die Masse wurde mit Milchsäurebakterien gemäß Mischung (i) und Lab versetzt und bei 30 °C etwa 2 h gerührt. Anschließend wurde das Fermentationsprodukt in eine Zentrifuge gegeben und die Sauermolke als flüssiger Bestandteil abgetrennt. Die zurückgebliebene Quarkmasse wurde durch Zugabe von Sahne auf einen Fettgehalt in der Trockenmasse von 40 Gew.-% und einen Proteingehalt von 12 Gew.- % eingestellt.

### VERKOSTUNG

Die Quarkgrundmassen wurden 24 Stunden im Kühlschrank bei 10 °C gelagert, anschließend 5 Minuten an die Umgebungstemperatur angepasst und dann von 5 Prüfern geschmacklich und sensorisch beurteilt, wobei die Skala von (1) = "schwach vorhanden" bis (5) = "stark ausgeprägt" reichte. Zudem wurde der Natriumgehalt der Produkte bestimmt. Die Ergebnisse sind in **Tabelle 1** zusammengefasst. Angegeben sind die Mittelwerte der Verkostung. Beispiel 1 ist erfindungsgemäß, die Beispiele V1 und V2 dienen zum Vergleich.

**Tabelle 1**

| Verkostungsergebnisse | | | |
|---|---|---|---|
| | **V1** | **V2** | **1** |
| ***Geschmackliche Beurteilung*** | | | |
| - bitter | 4,0 | 2,5 | 1,0 |
| - sandig | 4,0 | 2,5 | 1,5 |
| - frisch | 2,0 | 4,0 | 4,0 |

| ***Sensorische Beurteilung*** | | | |
|---|---|---|---|
| - cremig | 2,5 | 4,0 | 4,0 |
| - weich | 2,5 | 4,0 | 4,0 |
| ***Na-Gehalt [ppm]*** | Nicht bestimmt | 145 | 28 |

Das erfindungsgemäße Produkt zeichnet sich gegenüber dem nächstliegenden Stand der Technik nicht nur dadurch aus, dass es einen um mehr als ¾ verminderten Natriumgehalt aufweist, in der Verkostung wird es auch als weniger bitter und weniger sandig sowie tendenziell auch als frischer und cremiger empfunden.

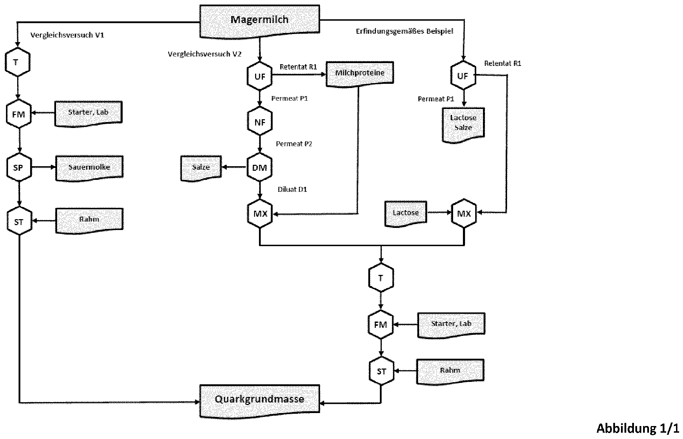

Die Verfahren gemäß den Beispielen 1 sowie V1 und V2 werden nachfolgend in der **Abbildung 1** noch einmal schematisch erläutert. Die Abkürzungen haben dabei folgende Bedeutung:
- T: = Temperaturbehandlung (Denaturierung)
- FM: = Fermentation
- SP: = Separierung
- ST: = Standardisierung
- UF: = Ultrafiltration
- DM: = Demineralisierung
- MX: = Vermischung

### VERKOSTUNG

Die Quarkgrundmassen wurden 24 Stunden im Kühlschrank bei 10 °C gelagert, anschließend 5 Minuten an die Umgebungstemperatur angepasst und dann von 5 Prüfern geschmacklich und sensorisch beurteilt, wobei die Skala von (1) = "schwach vorhanden" bis (5) = "stark ausgeprägt" reichte. Zudem wurde der Natriumgehalt der Produkte bestimmt. Die Ergebnisse sind in **Tabelle 1** zusammengefasst. Angegeben sind die Mittelwerte der Verkostung. Beispiel 1 ist erfindungsgemäß, die Beispiele V1 und V2 dienen zum Vergleich.

**Tabelle 1**

| Verkostungsergebnisse | | | |
|---|---|---|---|
| | **V1** | **V2** | **1** |
| ***Geschmackliche Beurteilung*** | | | |
| - bitter | 4,0 | 2,5 | 1,0 |
| - sandig | 4,0 | 2,5 | 1,5 |
| - frisch | 2,0 | 4,0 | 4,0 |

| ***Sensorische Beurteilung*** | | | |
|---|---|---|---|
| - cremig | 2,5 | 4,0 | 4,0 |
| - weich | 2,5 | 4,0 | 4,0 |
| ***Na-Gehalt [ppm]*** | Nicht bestimmt | 145 | 28 |

Das erfindungsgemäße Produkt zeichnet sich gegenüber dem nächstliegenden Stand der Technik nicht nur dadurch aus, dass es einen um mehr als ¾ verminderten Natriumgehalt aufweist, in der Verkostung wird es auch als weniger bitter und weniger sandig sowie tendenziell auch als frischer und cremiger empfunden.

Die Verfahren gemäß den Beispielen 1 sowie V1 und V2 werden nachfolgend in der **Abbildung 1** noch einmal schematisch erläutert. Die Abkürzungen haben dabei folgende Bedeutung:
- T: = Temperaturbehandlung (Denaturierung)
- FM: = Fermentation
- SP: = Separierung
- ST: = Standardisierung
- UF: = Ultrafiltration
- DM: = Demineralisierung
- MX: = Vermischung

## Patentansprüche

1. Verfahren zur Herstellung einer mineralarmen Quarkgrundmasse, umfassend die folgenden Schritte:
(a) Erzeugen einer Magermilch durch Temperaturbehandlung einer Rohmilch und Abtrennung des Rahms;
(b) Unterwerfen der so erzeugten Magermilch einer Ultrafiltration unter Erhalt eines proteinreichen Retentats R1 und eines lactosereichen Permeats P1, wobei die Ultrafiltration mit Membranen durchführt, die eine Trennschärfe von 1.000 bis 50.000 Dalton aufweisen;
(c) Anreichern des Retentats R1 mit einer Menge Lactose, die der Menge entspricht, die zuvor in der Ultrafiltration als Permeat abgetrennt worden ist,
(d) Temperaturbehandlung des so erzeugten Anreicherungsproduktes, bis Denaturierung eintritt,
(e) Fermentieren des so erzeugten Denaturierungsproduktes durch Zugabe von Starterkulturen und Lab sowie
(f) Einstellen des so erzeugten Fermentationsproduktes auf einen definierten Trockenmassen- und Proteingehalt.

2. Verfahren nach Anspruch 1, **dadurch gekennzeichnet, dass** man die Ultrafiltration mit Spiralwickelmodulen und/oder Platte-Rahmen-Modulen durchführt.

3. Verfahren nach mindestens einem der Ansprüche 1 bis 2, **dadurch gekennzeichnet, dass** man die Ultrafiltration bei einer Temperatur im Bereich von 10 bis 55 °C durchführt.

4. Verfahren nach mindestens einem der Ansprüche 1 bis 3, **dadurch gekennzeichnet, dass** man das Anreicherungsprodukt auf eine Lactosekonzentration von etwa 0,1 bis etwa 3 Gew.-% einstellt.

5. Verfahren nach mindestens einem der Ansprüche 1 bis 4, **dadurch gekennzeichnet, dass** man dem Anreicherungsprodukt weitere Zusatzstoffe beifügt.

6. Verfahren nach mindestens einem der Ansprüche 1 bis 5, **dadurch gekennzeichnet, dass** man das Anreicherungsprodukt aus dem Retentat R1 und Lactose über einen Zeitraum von 5 bis 10 min einer Temperaturbehandlung von 85 bis 90 °C unterwirft und dabei denaturiert.

7. Verfahren nach mindestens einem der Ansprüche 1 bis 6, **dadurch gekennzeichnet, dass** man das Denaturierungsprodukt bei 25 bis 35 °C mit Kulturen und Lab versetzt.

8. Verfahren nach mindestens einem der Ansprüche 1 bis 7, **dadurch gekennzeichnet, dass** man Kulturen einsetzt, bei denen es sich um eine der beiden folgenden Mischungen 1 oder 2 handelt:
Mischung 1
(i-1) *Streptococcus thermophilus,*
(i-2) *Leuconostoc species,*
(i-3) *Lactococcus lactis subsp. lactis biovar diacetylactis,*
(i-4) *Lactococcus lactis subsp. lactis* und
(i-5) *Lactococcus lactis subsp. cremoris,* sowie
Mischung 2
(ii-1) *Streptococcus thermophilus,*
(ii-2) *Lactococcus lactis subsp. lactis* und
(ii-3) *Lactococcus lactis subsp. cremoris*

9. Verfahren nach mindestens einem der Ansprüche 1 bis 8, **dadurch gekennzeichnet, dass** man das Fermentierungsprodukt auf eine Trockenmasse von 15 bis 20 Gew.-% und einen Proteingehalt von 10 bis 15 Gew.-% einstellt.

10. Verfahren nach mindestens einem der Ansprüche 1 bis 9, **dadurch gekennzeichnet, dass** man das Fermentierungsprodukt durch Zugabe eines Teils der Rahmfraktion aus Schritt (a) einstellt.

## Claims

1. A process for the production of a low-mineral quark matrix, comprising the following steps:
(a) producing a skimmed milk by heat treatment of raw milk, and separation of cream;
(b) subjecting the skimmed milk such obtained to an ultrafiltration step, with a membrane having a cut-off of 1,000 to 50,000 Dalton, obtaining a high-protein retentate R1 and a high-lactose permeate P1;
(c) enriching the retentate R1 with an amount of lactose which corresponds to the amount separated in the ultrafiltration step as permeate,
(d) heat treating the enrichment product such obtained until denaturation sets in,
(e) fermenting the denaturation product such obtained by adding starter cultures and rennet, and
(f) adjusting the fermentation product thus obtained to defined dry matter and protein content,

2. The process according to claim 1, wherein the ultrafiltration is performed using spiral coil modules and/or plate and frame modules.

3. The process according to at least one of claims 1 to 2, wherein the ultrafiltration is performed at a temperature within the range of 10 to 55 °C.

4. The process according to at least one of claims 1 to 3, wherein the enrichment product is adjusted to a lactose concentration of about 0.1 to about 3% by weight.

5. The process according to at least one of claims 1 to 4, wherein further additives are added to the enrichment product.

6. The process according to at least one of claims 1 to 5, wherein the enrichment product of the retentate R1 and lactose is subjected to heat treatment at a temperature of 85 to 90 °C for a period of 5 to 10 minutes, and denaturing.

7. The process according to at least one of claims 1 to 6, wherein the cultures and rennet are added to the denaturation product at 25 to 35 °C.

8. The process according to at least one of claims 1 to 7, wherein the cultures are one of the two following mixtures 1 or 2:
Mixture 1
(i-1) *Streptococcus thermophilus,*
(i-2) *Leuconostoc species,*
(i-3) *Lactococcus lactis subsp. lactis biovar diacetylactis,*
(i-4) *Lactococcus lactis subsp. Lactis, and*
(i-5) *Lactococcus lactis subsp. cremoris, and*
Mixture 2
(ii-1) *Streptococcus thermophilus,*
(ii-2) *Lactococcus lactis subsp. lactis, and*
(ii-3) *Lactococcus lactis subsp. cremoris.*

9. The process according to at least one of claims 1 to 8, wherein the fermentation product is adjusted to a dry matter content of 15 to 20% by weight and a protein content of 10 to 15% by weight.

10. The process according to at least one of claims 1 to 9, wherein the fermentation product is adjusted by adding a portion of the cream fraction from step (a).

## Revendications

1. Un procédé de préparation d'une base de caillebotte à faible teneur en minéraux comprenant les étapes suivantes :
(a) production d'un lait écrémé par traitement thermique d'un lait cru et séparation de la crème ;
(b) soumettre le lait écrémé ainsi produit à une ultrafiltration pour obtenir un rétentat riche en protéines R1 et un perméat riche en lactose P1, l'ultrafiltration étant réalisée avec des membranes ayant une efficacité de séparation de 1 000 à 50 000 daltons ;
(c) enrichissement de rétentat R1 avec une quantité de lactose correspondant à la quantité de perméat préalablement séparée lors de l'ultrafiltration,
(d) traitement thermique du produit d'enrichissement ainsi produit jusqu'à sa dénaturation,
(e) fermentation du produit de dénaturation ainsi obtenu par l'ajout de cultures de démarrage et de présure
(f) ajuster le produit de fermentation ainsi obtenu à une teneur définie en matière sèche et en protéines.

2. Procédé selon la revendication 1, **caractérisé en ce que** l'ultrafiltration est effectuée avec des modules enroulés en spirale et/ou des modules à cadre en plaque.

3. Procédé selon au moins une des revendications 1 à 2, **caractérisé en ce que** l'ultrafiltration est effectuée à une température comprise entre 10 et 55°C.

4. Procédé selon au moins une des revendications 1 à 3, **caractérisé en ce que** le produit d'enrichissement est ajusté à une concentration en lactose d'environ 0,1 à environ 3 % en poids.

5. Procédé selon au moins une des revendications 1 à 4, **caractérisé en ce que** d'autres additifs sont ajoutés au produit d'enrichissement.

6. Procédé selon au moins une des revendications 1 à 5, **caractérisé en ce que** le produit d'enrichissement provenant du rétentat R1 et du lactose est soumis à un traitement thermique de 85 à 90°C pendant une période de 5 à 10 minutes et est ainsi dénaturé.

7. Procédé selon au moins une des revendications 1 à 6, **caractérisé en ce que** des cultures et de la présure sont ajoutées au produit de dénaturation à une température de 25 à 35°C.

8. Procédé selon au moins une des revendications 1 à 7, **caractérisé en ce que** l'on utilise des cultures qui sont un des deux mélanges suivants 1 ou 2 :
Mélange 1
(i-1) *Streptococcus thermophilus*,
(i-2) *Espèces leuconostoc*,
(i-3) *Lactococcus lactis subsp. lactis biovar diacetylactis*,
(i-4) *Lactococcus lactis subsp. lactis* et
(i-5) *Lactococcus lactis subsp. cremoris*, et
Mélange 2
(ii-1) *Streptococcus thermophilus*,
(ii-2) *Lactococcus lactis subsp. lactis* et
(ii-3) *Lactococcus lactis subsp. Cremoris.*

9. Procédé selon au moins une des revendications 1 à 8, **caractérisé en ce que** le produit de fermentation est ajusté à une teneur en matière sèche de 15 à 20% en poids et à une teneur en protéines de 10 à 15% en poids.

10. Procédé selon au moins une des revendications 1 à 9, **caractérisé en ce que** le produit de fermentation est ajusté en ajoutant une partie de la fraction de crème de l'étape (a).
